## Europäisches Patentamt
## European Patent Office
## Office européen des brevets

(11) Veröffentlichungsnummer: **0 289 790 B1**

(12) # EUROPÄISCHE PATENTSCHRIFT

(45) Veröffentlichungstag der Patentschrift: 04.09.91

(51) Int. Cl.⁵: **A21C 11/10**

(21) Anmeldenummer: **88105426.6**

(22) Anmeldetag: **06.04.88**

(54) **Ausstechmaschine.**

(30) Priorität: **06.05.87 DE 8706447 U**

(43) Veröffentlichungstag der Anmeldung:
**09.11.88 Patentblatt 88/45**

(45) Bekanntmachung des Hinweises auf die
Patenterteilung:
**04.09.91 Patentblatt 91/36**

(84) Benannte Vertragsstaaten:
**BE DE FR GB IT NL**

(56) Entgegenhaltungen:
**DE-C- 502 785**
**GB-A- 244 801**
**GB-A- 507 601**

(73) Patentinhaber: **Hecrona Maschinen Industrie-gesellschaft m.b.H.**
**Hocksteiner Weg 56**
**W-4050 Mönchengladbach(DE)**

(72) Erfinder: **Lassmann, Heribert**
**Erlenweg 53**
**W-4152 Kempen 1(DE)**

(74) Vertreter: **Stark, Walter, Dr.-Ing.**
**Moerser Strasse 140**
**W-4150 Krefeld(DE)**

## Beschreibung

Die Erfindung betrifft eine Ausstechmaschine mit einer rotierend angetriebenen, elastischen Walze, mit einer Ausstechwalze, die mit der elastischen Walze einen Walzenspalt bildet und deren Antrieb vom Antrieb der elastischen Walze abgeleitet ist, und mit einem Ausstechband, das durch den Walzenspalt geführt sowie außerdem über die elastische Walze angetrieben ist.

Derartige Ausstechmaschinen, wie z.B. im Dokument DE-C-502 785 dargesstellt, werden zum Ausstechen von Teigformlingen aus einem Teigband eingesetzt. Dabei ist es wesentlich, daß im Walzenspalt die Umfangsgeschwindigkeiten der Walzen und die Transportgeschwindigkeiten des Ausstechbandes gleich sind. Die dafür erforderliche Syncronisation ist problematisch.

Bei einer bekannten Ausstechmaschine werden die Durchmesser der elastischen Walze und der Ausstechwalze sowie die Dicke des Ausstechbandes in einem ganz bestimmten Verhältnis gehalten. Bei einer Veränderung dieser Parameter durch Verschleiß ist eine korrekte Arbeitsweise nicht mehr gewährleistet.

Bei einer anderen Ausführung wird die Ausstechwalze von der elastischen Walze über einen zwischengeschalteten Drehzahlwandler angetrieben und kann dadurch auch bei unterschiedlichen Durchmessern der Ausstechwalze syncronisiert werden. Um aber die erforderliche Übersetzungstreue bei Dauerbetrieb zu erreichen, ist eine aufwendige elektronisch gesteuerte Gleichlaufregelung erforderlich.

Aufgabe der Erfindung ist es, eine Ausstechmaschine der eingangs beschriebenen Gattung anzugeben, die ohne bestimmte Zuordnung der Durchmesser der elastischen Walze und der Ausstechwalze sowie der Dicke des Ausstechbandes, aber auch ohne Zwischenschaltung eines Drehzahlwandlers zwischen die elastische Walze und die Ausstechwalze eine exakte Syncronisation gewährleistet.

Diese Aufgabe wird dadurch gelöst, daß ein Freilauf vorgesehen ist, dessen einer Teil antriebsmäßig mit der elastischen Walze oder deren Antrieb und deren anderer Teil antriebsmäßig mit der Ausstechwalze verbunden ist. Bei dieser Ausstechmaschine wird die Ausstechwalze entweder über das Ausstechband von der elastischen Walze direkt angetrieben oder, wenn die insoweit übertragene Antriebsleistung nicht ausreicht, über den Freilauf. Das gelingt insbesondere dann, wenn die Übersetzungsverhältnisse derart eingerichtet werden, daß die vom Transportband mitgenommene Ausstechwalze etwas schneller läuft als beim Antrieb über den Freilauf. Im Ergebnis werden damit Fehleinstellungen der Maschine vermieden und die hergestellten Produkte werden besser. Die Maschine ist auch preiswerter und damit wirtschaftlicher.

Vorzugsweise sollte der Freilauf einen Innenring aufweisen, der über ein Stirnradgetriebe mit der Ausstechwalze gekoppelt ist. In Kombination dazu kann der Freilauf einen Außenring aufweisen, der über eine Kettentransmission mit der elastischen Walze gekoppelt ist. Das alles ermöglicht eine einfache und kompakte Bauweise.

Das Arbeiten mit Ausstechwalzen unterschiedlichen Durchmessern ist möglich, wenn die Ausstechwalze auf einer Schwinge gelagert ist, deren Schwenkachse mit der Achse des die Ausstechwalze unmittelbar antreibenden Zahnrades fluchtet. Wenn zwischen der Ausstechwalze und dem Freilauf ein einstufiges Stirnradgetriebe angeordnet ist, fluchtet die Schwenkachse der Schwinge mit der Achse des Freilaufs. Der erforderliche Andruck zwischen Ausstechwalze und elastischer Walze kann durch eine Stellvorrichtung aufgebracht werden, die an der Schwinge angreift und die die Ausstechwalze gegen die elastische Walze drückt.

Im folgenden wird ein in der Zeichnung dargestelltes Ausführungsbeispiel der Erfindung erläutert; es zeigen:

Fig. 1    schematisch eine Seitenansicht einer Ausstechmaschine,

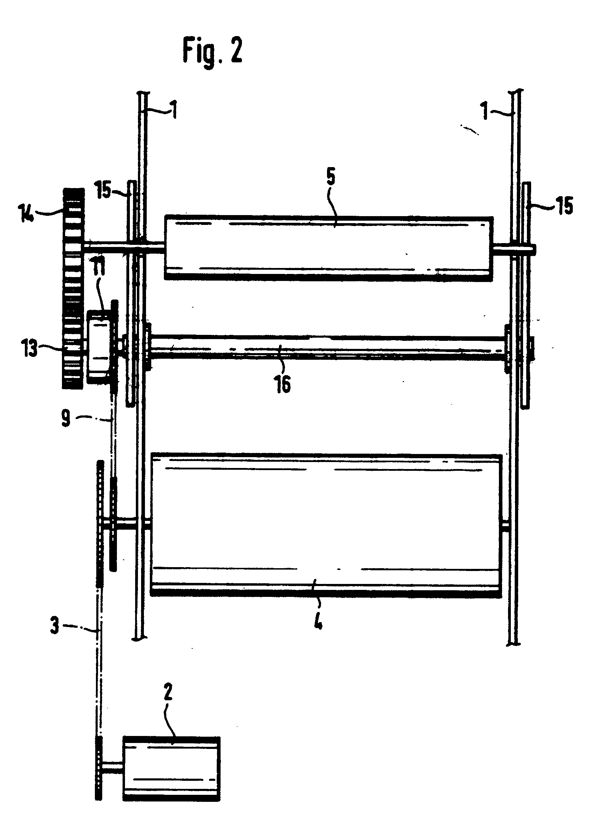

Fig. 2    schematisch die Antriebsverhältnisse zwischen auseinandergezogenen Walzen.

Zu der dargestellten Ausstechmaschine gehört ein Maschinengestell 1, in dessen unteren Teil ein Antrieb 2 gelagert ist, der über eine Transmission 3 eine im oberen Teil des Maschinengestells 1 gelagerte elastische Walze 4 antreibt. Oberhalb der elastischen Walze 4 befindet sich eine Ausstechwalze 5, die mit der elastischen Walze 4 einen Walzenspalt bildet, durch den das Obertrum eines Ausstechbandes 6 geführt ist, auf dem ein Teigband 7 aufliegt. Das Untertrum des Ausstechbandes 6 wird über nicht dargestellte Umlenkrollen sowie über beidseits der elastischen Walze 4 angeordnete Umlenkrollen 8 und den unteren Teil der elastischen Walze 4 geführt, so daß es mit einer Geschwindigkeit angetrieben wird, die der Umfangsgeschwindigkeit der elastischen Walze 4 entspricht.

Von der elastischen Walze 4 geht eine Kettentransmission 9 aus, die über Umlenkrollen 10 den Außenring 11 eines Freilaufs 12 antreibt. Auf dem Innenring des Freilaufs 12 sitzt ein Stirnrad 13, welches mit einem weiteren Stirnrad 14 auf der Welle der Ausstechwalze 5 kämmt.

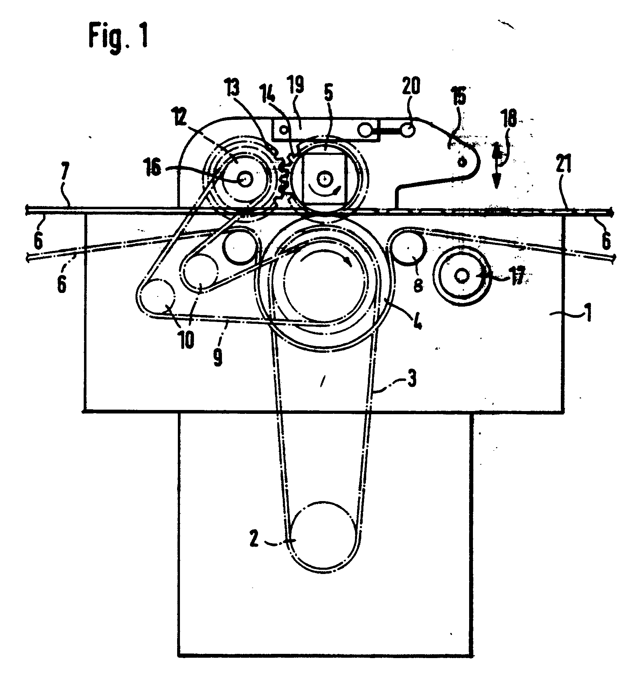

Die Ausstechwalze 5 ist einer Schwinge 15 gelagert, deren Schwenkachse 16 mit der Achse des Freilaufs 12 zusammenfällt. Am freien Ende der Schwinge 15 greift eine Stellvorrichtung 17 an, mit der die Ausstechwalze 5 gegen die elastische Walze 4 gedrückt werden kann, wie das in Fig. 1 durch den Doppelpfeil 18 angedeutet ist. Eine Lagerbrücke 19 mit Klemmhebel 20 an der Oberseite der Schwinge 15 ermöglicht das Auswechseln der Ausstechwalze 5.

Bei der dargestellten Ausstechmaschine sind die Übersetzungsverhältnisse so eingerichtet, daß die vom Ausstechband 6 mitgenommene Ausstechwalze 5 etwas schneller läuft als beim Antrieb über den Freilauf 12.

Die dargestellte Ausstechmaschine arbeitet wie folgt: Bei eingeschaltetem Antrieb 2 rotiert die elastische Walze 4 mit vorgegebener Drehzahl. Sie nimmt dabei das Ausstechband 6 mit, dessen Obertrumm eine Geschwindigkeit besitzt, die der Umfangsgeschwindigkeit der elasstischen Walze 4 entspricht. Wird mit Hilfe der Stellvorrichtung 17 die Schwinge 15 und damit die Ausstechwalze 5 gegen die elastische Walze 4 gedrückt, dann wird die Ausstechwalze 5 vom Ausstechband 6 mitgenommen und läuft damit syncron. Aus dem Teigband 7 werden Teigformlinge 21 ausgestochen, die vom Ausstechband 6 mitgenommen werden. Wenn auf die Ausstechwalze 5 ein zusätzlicher Widerstand einwirkt, z. B. eine Falte im Teigband 7, reduziert sich kurzfristig die Drehzahl der Ausstechwalze und die Störung wird kurzfristig durch den dann einsetzenden Zwangsantrieb über den Freilauf 12 überwunden.

## Patentansprüche

1. Ausstechmaschine mit einer rotierend angetriebenen, elastischen Walze, mit einer Ausstechwalze, die mit der elastischen Walze einen Walzenspalt bildet und deren Antrieb vom Antrieb der elastischen Walze abgeleitet ist, und mit einem Ausstechband, das durch den Walzenspalt geführt sowie außerdem über die elastische Walze angetrieben ist, dadurch gekennzeichnet, daß ein Freilauf (12) vorgesehen ist, dessen einer Teil (11) antriebsmäßig mit der elastischen Walze (4) oder deren Antrieb (2) und derer anderer Teil antriebsmäßig mit der Ausstechwalze (5) verbunden ist.

2. Ausstechmaschine nach Anspruch 1, gekennzeichnet durch Übersetzungsverhältnisse derart, daß die vom Ausstechband (6) mitgenommene Ausstechwalze (5) etwas schneller läuft als beim Antrieb über den Freilauf (12).

3. Ausstechmaschine nach Anspruch 1 oder 2, dadurch gekennzeichnet, daß der Freilauf (12) einen Innenring aufweist, der über ein Stirnradgetriebe (13, 14) mit der Ausstechwalze (5) gekoppelt ist.

4. Ausstechmaschine nach einem der Ansprüche 1 bis 2, dadurch gekennzeichnet, daß der Freilauf (12) einen Außenring (11) aufweist, der über eine Kettentransmission (9) mit der elastischen Walze (4) gekoppelt ist.

5. Ausstechmaschine nach einem der Ansprüche 1 bis 4, dadurch gekennzeichnet, daß die Ausstechwalze (5) auf einer Schwinge (15) gelagert ist, deren Schwenkachse 16 mit der Achse des die Ausstechwalze (5) unmittelbar antreibenden Stirnrades (13) fluchtet.

6. Ausstechmaschine nach einem der Ansprüche 1 bis 5, dadurch gekennzeichnet, daß zwischen der Ausstechwalze (5) und dem Freilauf (12) ein einstufiges Stirnradgetriebe (13, 14) angeordnet ist und daß die Schwenkachse (16) der Schwinge (15) mit der Achse des Freilaufs (12) fluchtet.

7. Ausstechmaschine nach einem der Ansprüche 1 bis 6, gekennzeichnet durch eine an der Schwinge angreifende Stellvorrichtung (17), die die Ausstechwalze (5) gegen die elastische Walze (4) drückt.

## Claims

1. Cutting-out machine, comprising a rotatingly driven, resilient roller, a cutting-out roller which forms a roller nip with the resilient roller and the driving means of which is derived from the driving means of the resilient roller, and a cutting-out belt which is guided through the roller nip and, moveover, is driven via the resilient roller, characterised in that an overrunning clutch (12) is provided, one portion (11) of which is drivingly connected to the resilient roller (4), or the driving means (2) of the roller, and the other portion of which is drivingly connected to the cutting-out roller (5).

2. Cutting-out machine according to claim 1, characterised by transmission ratios such that the cutting-out roller (5), which is driven by the cutting-out belt (6), rotates somewhat more rapidly than during the driving operation via the overrunning clutch (12).

3. Cutting-out machine according to claim 1 or 2, characterised in that the overrunning clutch (12) includes an inner ring, which is connected to the cutting-out roller (5) via a spur-wheel gear (13, 14).

4. Cutting-out machine according to one of claims 1 to 2, characterised in that the overrunning clutch (12) includes an outer ring (11), which is connected to the resilient roller (4) via a chain transmission (9).

5. Cutting-out machine according to one of claims 1 to 4, characterised in that the cutting-out roller (5) is mounted on a rocker arm (15), the pivot axle (16) of which is in alignment with the axle of the spur wheel (13), which directly drives the cutting-out roller (5).

6. Cutting-out machine according to one of claims 1 to 5, characterised in that a single-stage spur-wheel gear (13, 14) is disposed between the cutting-out roller (5) and the overrunning clutch (12), and in that the pivot axle (16) of the rocker arm (15) is in alignment with the axle of the overrunning clutch (12).

7. Cutting-out machine according to one of claims 1 to 6, characterised by an adjusting device (17), which engages with the rocker arm and urges the cutting-out roller (5) towards the resilient roller (4).

**Revendications**

1. Machine à découper comprenant un cylindre élastique entraîné en rotation, un cylindre à découper, formant avec le cylindre élastique un espacement entre cylindres et dont l'entraînement est dérivé de l'entraînement du cylindre élastique, ainsi qu'une bande de découpage guidée à travers l'espacement entre cylindres et est entraînée en outre par l'intermédiaire du cylindre élastique, caractérisée en ce qu'elle possède une roue libre (12) dont une partie (11) est reliée pour l'entraînement au cylindre élastique (4) ou à l'entraînement (2) de ce cylindre et dont l'autre partie est reliée pour l'entraînement au cylindre à découper (5).

2. Machine à découper selon la revendication 2, caractérisée par des rapports de transmission tels que le cylindre à découper (5) tourne un peu plus vite lorsqu'il est entraîné par la bande de découpage (6) que lorsqu'il est entraîné par l'intermédiaire de la roue libre (12).

3. Machine à découper selon la revendication 1 ou 2, caractérisée en ce que la roue libre (12) comporte une bague intérieure accouplée par un engrenage droit (13, 14) au cylindre à découper (5).

4. Machine à découper selon une des revendications 1 à 3, caractérisée en ce que la roue libre [12] comporte une bague extérieure (11) accouplée par une transmission à chaîne (9) au cylindre élastique (4).

5. Machine à découper selon une des revendications 1 à 4, caractérisée en ce que le cylindre à découper (5) est monté sur un support oscillant (15) dont l'axe d'oscillation (16) est aligné avec l'axe de la roue dentée droite [13] entraînant directement le cylindre à découper (5).

6. Machine à découper selon une des revendications 1 à 5, caractérisée en ce qu'un engrenage droit (13, 14) à un étage est disposé entre le cylindre à découper (5) et la roue libre (12) et que l'axe d'oscillation (16) du support oscillant (15) est aligné avec l'axe de la roue libre (12).

7. Machine à découper selon une des revendications 1 à 6, caractérisée par un dispositif de Positionnement (17) qui attaque le support oscillant et presse le cylindre à découper (5) contre le cylindre élastique (4).

# Fig. 1

# Fig. 2